# EUROPEAN PATENT APPLICATION

(11) **EP 4 672 472 A1**
(43) Date of publication of application: **31.12.2025**
(21) Application number: 24904186.4
(22) Date of filing: 06.12.2024
(51) Int. Cl.: H01M 50/367, H01M 10/6567, H01M 10/613, H01M 50/291, H01M 50/264, H01M 50/249

(54) **BATTERY ASSEMBLY, AND BATTERY PACK AND VEHICLE INCLUDING SAME**

(30) Priority: 11.12.2023 KR 20230178828; 05.12.2024 KR 20240179119
(71) Applicant: LG ENERGY SOLUTION, LTD., Seoul 07335 (KR)
(72) Inventor: JUNG, Minyong, Daejeon 34122 (KR); CHOI, Bum, Daejeon 34122 (KR); KIM, Gae Sung, Daejeon 34122 (KR); KWON, Jung Geun, Daejeon 34122 (KR); CHOI, Seungbin, Daejeon 34122 (KR); CHUNG, Jaeheon, Daejeon 34122 (KR); PARK, Jonghee, Daejeon 34122 (KR)
(74) Representative: Goddar, Heinz J.
(86) International application number: PCT/KR2024/019932
(87) International publication number: WO 2025/127621

(57) **Abstract**

The present disclosure relates to a battery assembly comprising: a plurality of battery cells having a vent part configured to discharge venting gas; a frame that is configured such that the plurality of battery cells are seated thereon and is formed with a plurality of vent holes at positions corresponding to the vent part; and a cover member that is configured to cover the vent holes and to be opened by the venting gas.

## Description

### [TECHNICAL FIELD]

### Cross-Reference to Related Application(s)

This application claims priority to and the benefit of Korean Patent Application No. 10-2023-0178828, filed on December 11, 2023, and Korean Patent Application No. 10-2024-0179119, filed on December 5, 2024, with the Korean Intellectual Property Office, the disclosures of which are incorporated herein by reference in their entirety.

The present disclosure relates to a battery assembly, a battery pack and vehicle including the same.

### [BACKGROUND]

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. Such a secondary battery is gaining attention as a novel energy source for enhancing environment friendliness and energy efficiency, in that it has a primary advantage of remarkable reducing the use of fossil fuels, and also generates no by-products resulting from the use of energy.

The types of secondary batteries currently widely used in the art include a lithium ion battery, a lithium polymer battery, a nickel cadmium battery, a nickel hydride battery, a nickel zinc battery, and the like. An operating voltage of the unit secondary battery cell, namely a unit battery cell, is about 2.5V~4.5V. Therefore, when an output voltage higher than the operating voltage is required, a plurality of battery cells may be connected in series to configure a battery pack. In addition, depending on the charge/discharge capacity required for the battery pack, a plurality of battery cells may also be connected in parallel to configure a battery pack. Thus, the number of battery cells included in the battery pack may be variously set in accordance with the required output voltage or charge/discharge capacity.

Meanwhile, when a plurality of battery cells are connected in series/parallel to configure a battery pack, it is common to make a battery assembly including at least one battery cell, and add other components thereto to at least one battery cell to configure a battery pack or a battery rack. Alternatively, cell-to-pack type battery packs, in which multiple battery cells are not modularized, but are directly housed in a pack housing or the like, have recently been manufactured.

Conventionally, in the case of a battery pack or a battery assembly to which battery cells are applied, the internal temperature may rise due to abnormalities or misuse of the battery cells, which may cause an increase in the internal pressure of the battery cells. Due to this internal pressure, the battery cells may vent or explode, and if the high-temperature gas and flame discharged at this time are transferred to adjacent battery cells, it may cause a chain explosion of battery cells, which is very dangerous.

Therefore, for example, conventional battery cells are manufactured to include a vent part on one side, and in the frame of the battery assembly that houses these battery cells, a portion that faces the vent part of the battery cell is prepared to be thin. Thereby, when a specific battery cell is vented, it is configured such that the relevant part is broken and venting gases, etc. are discharged to the outside, thereby delaying the time required for high-temperature gases and flames to transfer to other battery cells, or preventing the transfer.

However, in such conventional battery assemblies, there was a process limitation in that the portion in which the frame is injection-molded and the battery cell is seated is prepared thin enough to be below a certain thickness. Thereby, when a specific battery cell is vented, the portion facing the vent part of that battery cells is not broken, so the time required for high-temperature gases and flames to be discharged to the outside is delayed when the battery cell is vented, and the possibility of occurrence of further chain ignition in adjacent battery cells due to the inflow into the battery assembly is high, and so the improvement thereof is required.

### [DETAILED DESCRIPTION OF THE INVENTION]

### [Technical Problem]

Therefore, it is an object of the present disclosure to provide a battery assembly that can more efficiently discharge high-temperature gases and flames to the outside in the event of an abnormality in the battery cell, and a battery pack and vehicle including the same.

The technical objects to be solved by the embodiments of the present disclosure are not limited to those disclosed above, and other objects which are not mentioned herein should be clearly understood by those skilled in the art from the following description

### [Technical Solution]

In order to above-mentioned object, according to the present disclosure, there is provided a battery assembly comprising: a plurality of battery cells having a vent part configured to discharge venting gas; a frame that is configured such that the plurality of battery cells are seated therein and is formed with a plurality of vent holes at positions corresponding to the vent part; and a cover member that is configured to cover the vent holes and to be opened by the venting gas.

The battery assembly may further comprise a cooling medium that is configured to be filled between the battery cells.

The cover member may be located at an inner side of the frame.

The cover member may be configured to cover at least a part of the plurality of vent holes.

The cover member may comprise a bent part configured such that the end part is bent and extended in a direction away from the vent hole.

The frame may comprise an inserting groove configured such that at least a part thereof is recessed so as to insert an end part of the cover member.

The cover member may be located at an outer side of the frame.

The battery assembly may further comprise a holder that is located at an inner side of the cover member and configured to at least partially house the battery cell.

The holder may comprise a plurality of housing parts that are configured to at least partially house each battery cell, and a spacer that is provided between adjacent housing parts among the plurality of housing parts and configured to maintain a gap between the battery cells.

The battery assembly may further comprise an adhesive configured to be filled between the battery cells and thus fix the battery cells to each other.

The adhesive may be interposed between the battery cell and the spacer.

The spacer may comprise a portion whose thickness becomes narrower as it goes in one direction.

The adhesive is interposed between the battery cell and the frame, and the frame may comprise a filling groove configured to be filled with the adhesive.

The frame may comprise a coupling protrusion configured such that at least a part thereof protrudes to the inside, and the holder may comprise a coupling groove configured to allow the coupling protrusion to be inserted therein.

The cover member may comprise a housing part that at least partially houses the battery cell.

The cover member may comprise a bottom part that faces the vent part.

The cover member may comprise a spacer that is provided between adjacent housing parts among the plurality of housing parts and configured to maintain a gap between the battery cells.

A vent flow path may be provided below the vent hole. The venting gas discharged from the vent part of the battery cell may pass through the vent hole and move to the vent flow path.

The battery assembly may further comprise an outer case provided in the outside of the frame, and may be formed with a vent flow path configured to communicate with the vent hole between the frame and the outer case.

The outer case may further comprise a rib configured to partition the vent flow path into a plurality of numbers.

The outer case may comprise a discharge part that is configured to communicate with the vent flow path and discharge the venting gas to the outside, and the rib may be configured to guide the venting gas to the discharge part.

Further, according to the present disclosure, there is provided a battery pack comprising the battery assembly according to the present disclosure.

Further, according to the present disclosure, there is provided a vehicle comprising the battery assembly according to the present disclosure.

### [Advantageous Effects]

According to an aspect of the present disclosure, the venting gas and flame that may occur in the event of an abnormality in the battery cell can be quickly discharged to the outside of the battery assembly, thereby ensuring the safety and reliability of the battery assembly.

According to another aspect of the present disclosure, when a thermal event occurs in a battery cell to generate high-temperature gas or flame, the venting gas and flame can be guided in a specific direction and quickly discharged to the outside of the battery assembly.

According to yet another aspect of the present disclosure, in the process of discharging venting gas or the like from the battery cell to the outside of the battery assembly, it is possible to prevent other battery cells from receiving thermal damage as much as possible, thereby preventing further chain ignition.

In addition, according to the present disclosure, several other effects may be achieved, which will be described in each example configuration, and descriptions of effects that can be easily inferred by those skilled in the art will be omitted.

### [BRIEF DESCRIPTION OF THE DRAWINGS]

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view of a battery assembly according to an embodiment of the present disclosure.
FIG. 2 is an exploded perspective view of major components of a battery assembly according to an embodiment of the present disclosure.
FIG. 3 is a schematic perspective view of a battery cell included in a battery assembly according to one embodiment of the present disclosure.
FIG. 4 is a cross-sectional view of a battery assembly according to one embodiment of the present disclosure. For example, FIG. 4 may be a diagram showing a cross section taken along the line I-I' of FIG. 1.
FIG. 5 is a diagram for explaining that a cover member is opened when a thermal event occurs in a battery assembly according to an embodiment of the present disclosure.
FIG. 6 is an internal perspective view of a battery assembly according to an embodiment of the present disclosure.
FIG. 7 is an exploded perspective view of partial components of a battery assembly to which a cover member is applied according to an embodiment of the present disclosure.
FIG. 8 is a cross-sectional view of a battery assembly to which a cover member is applied according to another embodiment of the present disclosure.
FIG. 9 is a cross-sectional view of a battery assembly to which a cover member is applied according to yet another embodiment of the present disclosure.
FIG. 10 is a cross-sectional view of a battery assembly according to another embodiment of the present disclosure.
FIG. 11 is a drawing for explaining that a cover member is opened when a thermal event occurs in the battery assembly of FIG. 10.
FIG. 12 is a cross-sectional view of a battery assembly according to an embodiment of the present disclosure. For example, FIG. 12 may be a diagram showing a cross section taken along the line I-I' of FIG. 1.
FIG. 13 is a perspective view of a holder applied to a battery assembly according to an embodiment of the present disclosure.
FIG. 14 is an upper view of a battery assembly according to an embodiment of the present disclosure as viewed from above. For example, FIG. 14 may be a diagram showing a cross section taken along the line II-II' of FIG. 1.
FIG. 15 is an enlarged view of a battery assembly according to an embodiment of the present disclosure.
FIG. 16 is a cross-sectional view of a battery assembly according to another embodiment of the present disclosure.
FIG. 17 is a cross-sectional view of a battery assembly according to yet another embodiment of the present disclosure.
FIG. 18 is a cross-sectional view of a battery assembly to which an outer case is applied according to an embodiment of the present disclosure.
FIG. 19 is a cross-sectional view of another part of a battery assembly to which an outer case is applied according to an embodiment of the present disclosure.
FIG. 20 is a cross-sectional view of a battery assembly according to another embodiment of the present disclosure.
FIG. 21 is a diagram for explaining that a cover member is opened when a thermal event occurs in the battery assembly of FIG. 20.
FIG. 22 is a schematic perspective view of a battery pack according to an embodiment of the present disclosure.
FIG. 23 is a schematic perspective view showing the inside of a battery pack according to another embodiment of the present disclosure.
FIG. 24 is an exploded perspective view of a battery pack according to another embodiment of the present disclosure.
FIG. 25 is a schematic perspective view of a vehicle including a battery pack according to an embodiment of the present disclosure.

### [DETAILED DESCRIPTION OF THE EMBODIMENTS]

Hereinafter, preferred embodiments of the present disclosure will be described in detail with reference to the accompanying drawings. Prior to the description, it should be understood that terms and words used in the specification and the appended claims should not be construed as having common and dictionary meanings, but should be interpreted as having meanings and concepts corresponding to technical ideas of the present disclosure in view of the principle that the inventor can properly define the concepts of the terms and words in order to describe his/her own invention as best as possible.

Therefore, embodiments described in the specification and the configurations shown in the drawings are not more than the most exemplary embodiments of the present disclosure and do not fully cover the spirit of the present disclosure. Accordingly, it should be understood that there may be various equivalents and modifications that can replace those when this application is filed.

In addition, the present disclosure includes various embodiments. For each embodiment, duplicate descriptions of configurations that are substantially the same or similar in each embodiment will be omitted, and the differences will be mainly described.

Meanwhile, even though the terms indicating directions such as "upper", "lower", "left", "right", "front" and "rear" are used herein, these terms are selected just for convenience of description only, and it is obvious to those skilled in the art that these terms may change depending on the location of a target object or an observer.

For example, in an embodiment of the present disclosure, the X-axis direction shown in the drawings may mean the left-right direction, the Y-axis direction may mean the front-back direction perpendicular to the X-axis direction on a horizontal plane (an X-Y plane), and the Z-axis direction may mean the up-down direction (vertical direction) perpendicular to both the X-axis direction and the Y-axis direction.

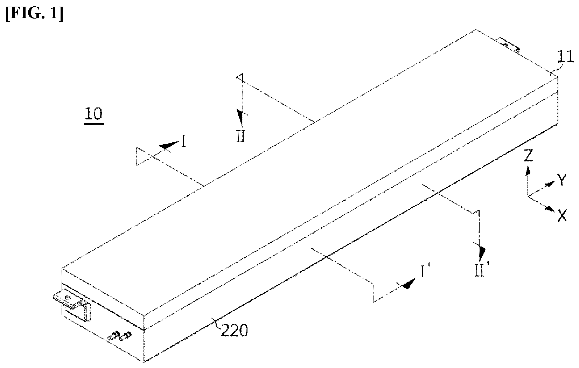

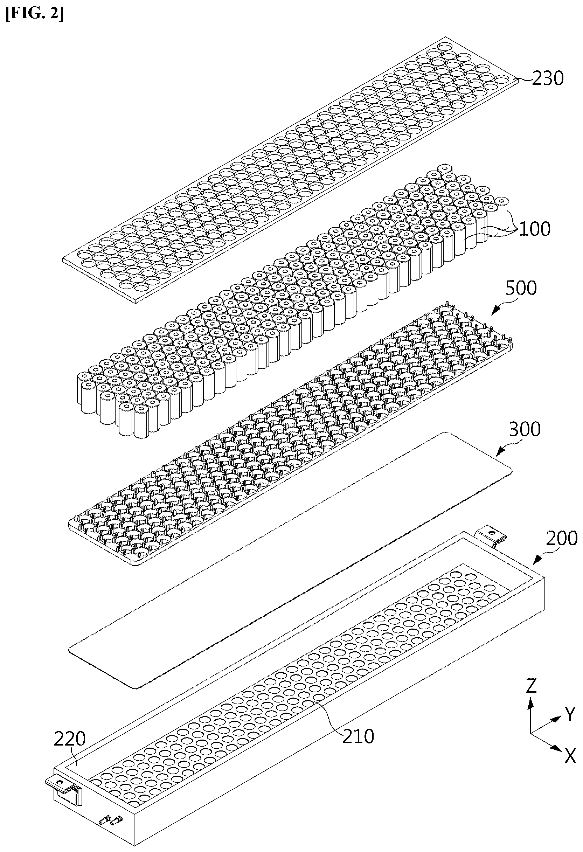

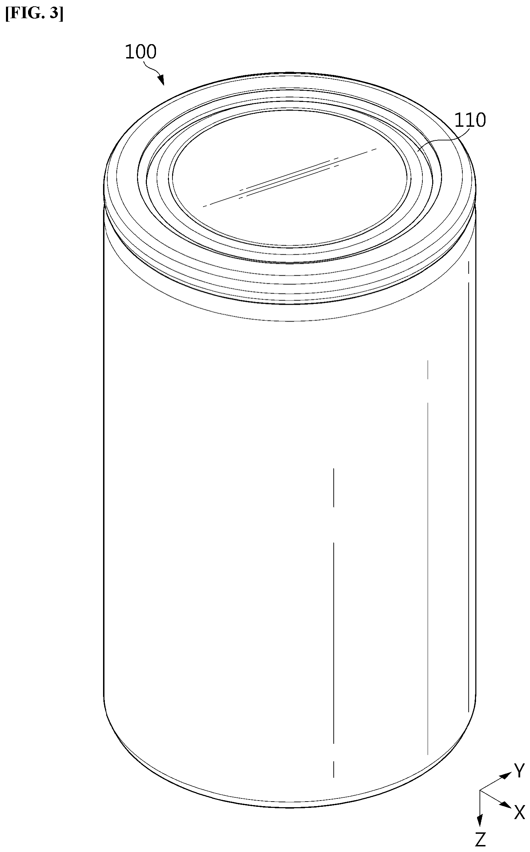

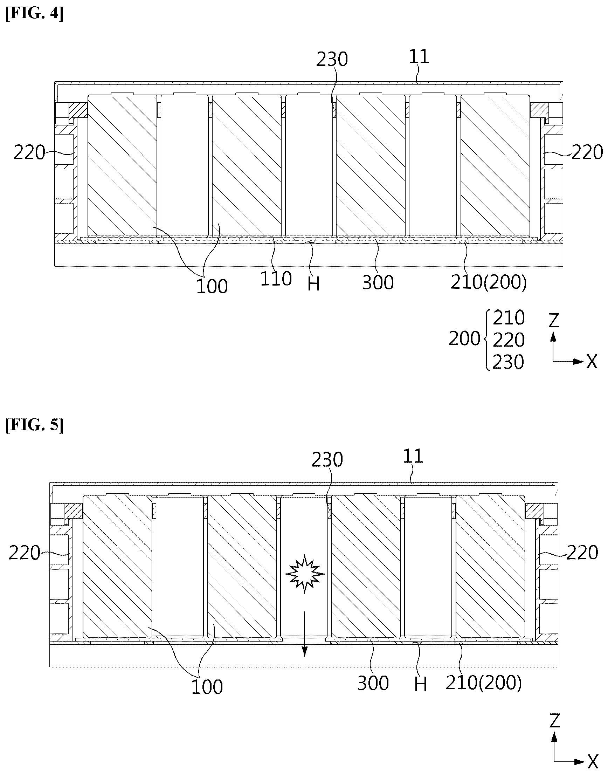

FIG. 1 is a schematic perspective view of a battery assembly according to an embodiment of the present disclosure. FIG. 2 is an exploded perspective view of major components of a battery assembly according to an embodiment of the present disclosure. FIG. 3 is a schematic perspective view of a battery cell included in a battery assembly according to one embodiment of the present disclosure. Further, FIG. 4 is a cross-sectional view of a battery assembly according to one embodiment of the present disclosure. For example, FIG. 4 may be a diagram showing a cross section taken along the line I-I' of FIG. 1. Further, FIG. 5 is a diagram for explaining that a cover member is opened when a thermal event occurs in a battery assembly according to an embodiment of the present disclosure.

Referring to FIGS. 1 to 5, a battery assembly 10 according to an embodiment of the present disclosure includes a battery cell 100, a frame 200, and a cover member 300.

A plurality of battery cells 100 may be disposed in a plurality of columns and rows to form one battery assembly 10. The plurality of battery cells 100 may be electrically connected to each other. The battery cell 100 may be applied even to any type of secondary battery, such as a prismatic, cylindrical, or pouch-type battery cell, and the present embodiment includes an example in which the battery cell 100 is provided as a cylindrical battery cell as in the embodiment shown in FIG. 2.

Specifically, referring to FIG. 3, the battery cell 100 may include an electrode assembly, a battery housing, a housing cover, and the like. Also, the battery cell 100 may include a vent part 110. The vent part 110 may be configured to discharge venting gas. The vent part 110 may be configured to be broken when the internal pressure of the battery housing rises above a certain level. For example, the vent part 110 may be a region that is formed in a part of the housing cover and is structurally weaker than the peripheral region so that it can be easily broken when internal pressure is applied. The vent part 110 may be, for example, a region having a thinner thickness compared to the peripheral region. Referring to FIG. 3, the vent part 110 may form a substantially circular closed loop.

As shown in FIG. 2, the battery assembly 10 of the present disclosure may be provided with the vent part 110 of the battery cell 100 toward a lower end. However, it goes without saying that without being limited thereto, the vent part 110 may be provided at other locations.

The frame 200 may be provided to fully house the plurality of battery cells 100. The frame 200 may be configured to gather the plurality of battery cells 100 into a single mass and maintain them as a single unit. The frame 200 may be formed from a plastic or metal material to maintain rigidity.

As shown in FIGS. 1 and 2, the frame 200 may be configured in the shape of a box having an open upper surface and consisting of four walls. The frame 200 may be configured such that a plurality of battery cells 100 are seated therein. The plurality of battery cells 100 may be housed in the frame 200 while standing upright in the Z-axis direction.

An assembly cover 11 may be coupled to the open upper surface of the frame 200. The assembly cover 11 may form an upper surface of the battery assembly 10. The assembly cover 11 may be configured to cover the battery cell 100 at the upper side. The assembly cover 11 and the frame 200 may be coupled to form a rectangular-parallelepiped box shape.

The frame 200 may be formed with a plurality of vent holes H. A plurality of vent holes H may be formed at positions corresponding to the vent parts 110 of the battery cell 100. A plurality of vent holes H may be formed at positions corresponding to the vent parts 110 of each battery cell 100. The vent holes H being formed at positions corresponding to the vent parts 110 means that the vent holes H and the vent parts 110 have overlapping portions when viewed along the height direction of the battery cell 100. Here, the height direction of the battery cell 100 may be a direction between an upper surface and a lower surface of the battery cell 100, which may be a direction parallel to the z-axis. That is, viewing along the height direction of the battery cell 100 means viewing along the +z-axis direction or the -z-axis direction on the xy plane.

The vent hole H may be configured to communicate the inside and outside of the battery assembly 10 with each other. Thereby, the venting gas discharged through the vent part 110 of the battery cell 100 may be discharged to the outside of the battery assembly 10 through the vent hole H.

Referring to FIG. 4, the cover member 300 may be configured to cover the vent hole H. That is, the cover member 300 may be configured to close the vent hole H. The cover member 300 may be located at an outer side of the battery cell 100. The cover member 300 may be configured to face the vent part 110 of the battery cell 100. FIG. 4 shows a configuration in which the cover member 300 is provided at a lower part of the battery cell 100 so that the battery cell 100 is secured thereon, however, the location of the cover member 300 may be set at another location depending on the location of the vent part 110 of the battery cell 100.

According to the embodiment of the present disclosure, the cover member 300 can prevent venting gas and the like from being discharged to the outside of the frame 200 in normal times. Thereby, in the normal state of the battery cell 100, it is possible to stably maintain a state in which the cover member 300 covers the vent hole H. Further, according to the embodiment of the present disclosure, the cover member 300 may close the vent hole H in normal times to prevent foreign materials from flowing into the inside of the frame 200 from the outside.

Moreover, referring to FIG. 5, the cover member 300 may be configured to be opened by the venting gas. That is, the cover member 300 may be configured to maintain a state of being attached to the frame 200 in normal times to cover the vent hole H and then open in a certain situation. Specifically, the cover member 300 may be configured to be opened by the pressure or heat of the venting gas when a thermal event occurs in the battery cell 100. For example, the cover member 300 may be released and detached from the state of being attached to the frame 200, or may be partially broken by the pressure of the venting gas, or may be melted and opened by the heat of the venting gas.

According to the embodiment of the present disclosure, when an abnormal situation occurs in the battery cell 100, the cover member 300 is opened, and the venting gas can be smoothly discharged to the outside of the frame 200 through an exposed portion of the vent hole H as shown by the bold arrow in FIG. 5. Thereby, when an abnormal situation occurs in the battery cell 100, it is possible to prevent the pressure inside the battery assembly 10 from rising, and prevent further chain ignition of other battery cells 100. Therefore, according to the aspect of the present disclosure, it is possible to guarantee the safety and reliability of the battery assembly 10.

Further, according to the embodiment of the present disclosure, the vent holes H provided at one side of the battery cells 100 other than a specific battery cell 100 in which an event has occurred are maintained in a closed state by the cover member 300, thereby making possible to suppress or prevent the venting gas discharged to the outside of the battery assembly 10 from affecting other adjacent battery cells 100. Thereby, it is possible to more effectively prevent further chain ignition of other battery cells 100.

The cover member 300 may be configured to have a flat surface. For example, the cover member 300 may be provided in the form of a film or sheet having a thin thickness. In the drawing, the thickness of the cover member 300 is maximized and shown, but the cover member 300 may be provided with a thickness of 200 um to 500 um. This cover member 300 may be attached to the frame 200 by a method such as applying an adhesive or ultrasonic welding.

According to the embodiment of the present disclosure, the frame 200 is provided with a vent hole H and the cover member 300 covering the vent hole H is provided with a very thin thickness, so that the cover member 300 can be quickly broken. Thereby, according to the embodiment of the present disclosure, when an abnormal situation occurs in the battery cell 100, the venting gas can be quickly discharged to the outside.

Meanwhile, referring to FIG. 2, the frame 200 can include a bottom frame 210, a side frame 220, and a top frame 230.

The bottom frame 210 may be provided at a lower part of the plurality of battery cells 100. Also, the bottom frame 210 may be formed with a vent hole H. A battery cell 100 may be provided for each vent hole H.

The side frame 220 may extend upward at each corner of the bottom frame 210. The side frame 220 may be provided with a plurality of unit walls so as to surround a plurality of battery cells 100. More specifically, the plurality of side frames 220 may be respectively provided with a right side wall located at the +X direction side end of the bottom frame 210, a rear wall located at the +Y direction side end, a left side wall located at the -X direction side end, and a front wall located at the -Y direction side end to form side surfaces of the battery assembly 10.

The top frame 230 may be configured to at least partially house the plurality of battery cells 100. The top frame 230 may be located spaced upward from the bottom frame 210. The top frame 230 may be configured to maintain a gap between the battery cells 100 at the upper parts of the plurality of battery cells 100. The top frame 230 may be provided to maintain the gap between the battery cells 100. The top frame 230 may be formed with holes into which the upper parts of the plurality of battery cells 100 are inserted.

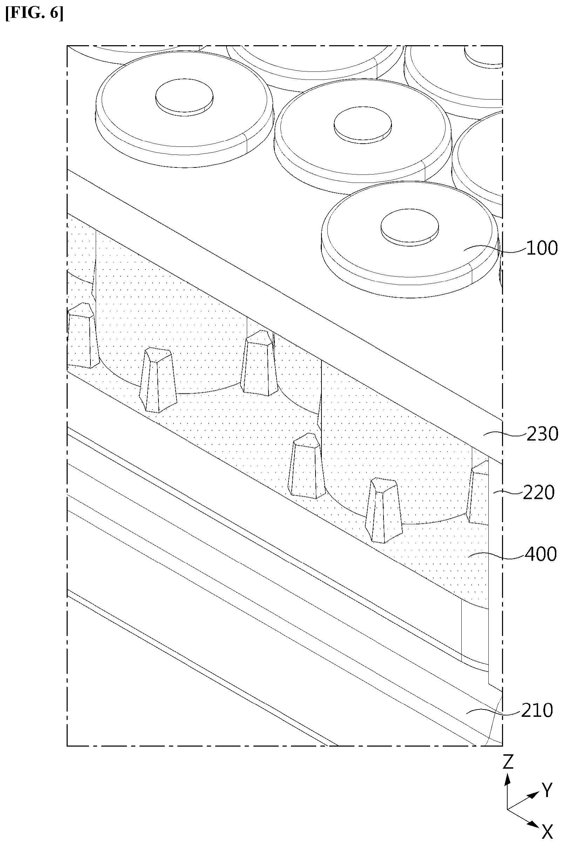

FIG. 6 is an internal perspective view of a battery assembly according to an embodiment of the present disclosure.

Referring to FIG. 6, the battery assembly 10 according to an embodiment of the present disclosure may further comprise a cooling medium 400. The cooling medium 400 may be formed from insulating oil or cooling water. The cooling medium 400 may be configured to be filled between the battery cells 100. In addition, the cooling medium 400 may be filled between the top frame 230 and the cover member 300. That is, a space between the top frame 230, the cover member 300, and the battery cell 100 may be filled with a cooling medium 400, which serves to prevent the temperature of the battery cell 100 from increasing due to high-temperature gas, flame, or the like.

Therefore, the battery cell 100 may be partially immersed in the cooling medium 400 within the battery assembly 10. Alternatively, the whole of the battery cells 100 may be immersed in the cooling medium 400 within the battery assembly 10. The cooling medium 400 may cool the battery cells 100 while being in direct contact with the battery cells 100. According to the embodiment of the present disclosure, the immersion cooling method may be employed, thereby being excellent in the cooling performance of the battery cell 100.

The cooling medium 400 can increase the thermal mass and delay the temperature rise of the battery cell 100 even in a situation such as rapid charging and discharging of the battery cell 100, thereby preventing a rapid temperature rise of the battery cell 100.

Meanwhile, although the cooling medium 400 is not shown in other figures other than FIG. 6, the cooling medium 400 may be interposed between the battery cells 100, as in the embodiment shown in FIG. 6.

Meanwhile, the battery assembly 10 of the present disclosure is subjected to an immersion cooling method in which a cooling medium 400 is filled between battery cells 100, which may cause the cooling medium 400 to leak to the outside through the vent holes H of the frame 200. Thereby, there is a need for a structure to prevent the cooling medium 400 from leaking to the outside.

The cover member 300 according to an embodiment of the present disclosure may be configured such that the cover member 300 prevents the penetration of moisture. The cover member 300 may be formed from any structure or material capable of preventing the penetration of moisture. For example, the cover member 300 may be formed from a waterproof material such as a waterproof film.

According to the embodiment of the present disclosure, the cover member 300 can be prevented from being damaged by the cooling medium 400, so that the closed state of the vent hole H of the cover member 300 can be further stably maintained. Further, according to the embodiment of the present disclosure, the cooling medium 400 can be prevented from leaking to the outside of the battery assembly 10 through the vent hole H, thereby further ensuring the cooling performance of the battery assembly 10.

Further, the cover member 300 may be formed from a material having heat resistance. The battery cell 100 may generate heat while repeatedly charging and discharging during a normal driving process. According to the embodiment of the present disclosure, even if high-temperature venting gas is generated in some battery cells 100 included in the battery assembly 10, the cover member 300 may not be opened if the gas is below a certain temperature, especially if a thermal event does not occur in the battery assembly 10 or if normal use is possible.

Meanwhile, the cover member 300 may be configured to be broken by the pressure of the venting gas. Alternatively, the cover member 300 may be configured to be at least partially melted by the heat of the flame. That is, the cover member 300 may be configured such that only the portion facing the vent part 110 through which the venting gas is vented is opened when an abnormal situation occurs in the battery cell 100. As a result, even if the cover member 300 is opened, the vent hole H is not fully opened but only a part thereof is opened, thereby preventing the cooling medium 400 from leaking to the outside through the vent hole H.

According to the embodiment of the present disclosure, it is possible to improve the sealing performance of the cover member 300 covering the vent hole H. In particular, in the case of immersion cooling where the cooling medium 400 is interposed between the battery cells 100, as the cover member 300 is opened, the cooling medium 400 can be reliably prevented from leaking to the outside through the vent hole H that is opened together.

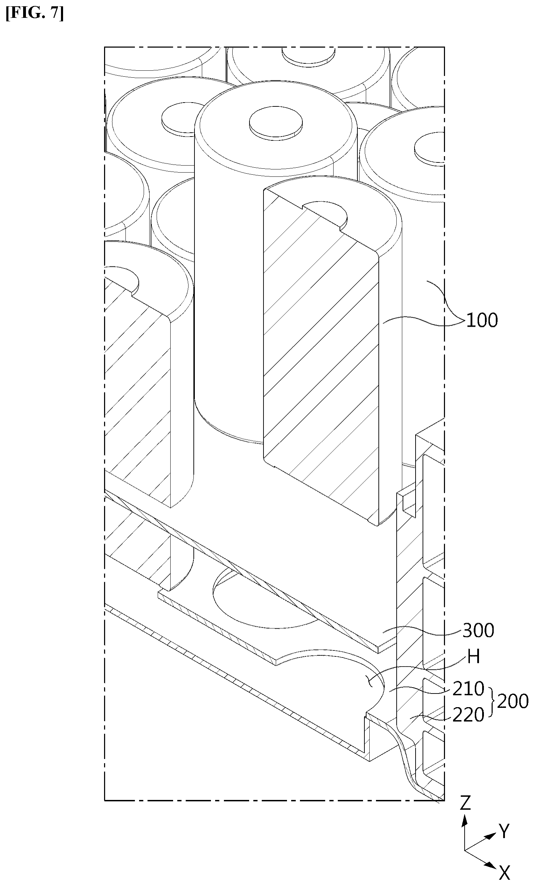

FIG. 7 is an exploded perspective view of a partial components of a battery assembly to which a cover member is applied according to an embodiment of the present disclosure.

The cover member 300 may be located at an inner side of the frame 200. That is, the cover member 300 may be configured to cover the vent hole H from the inside. In particular, as in the embodiment shown in FIG. 7, the cover member 300 may be configured to be seated on the frame 200, e.g., the bottom frame 210. The cover member 300 may be configured to cover the vent hole H at the inside of the bottom frame 210. The cover member 300 may be located between the battery cells 100 and the frame 200, and more specifically, the cover member 300 may be located between the battery cells 100 and the bottom frame 210.

The cover member 300 may be configured to cover at least a part of the plurality of vent holes H. That is, the cover member 300 may be configured to cover at least a part of the vent holes H at once, rather than covering each of the plurality of vent holes H.

Furthermore, the cover member 300 may be configured to cover all of the plurality of vent holes H, as in the embodiment shown in FIG. 7. In this case, the cross-sectional area of the cover member 300 may be configured to correspond to the area of the bottom frame 210. According to the embodiment of the present disclosure, the vent hole H can be more effectively sealed by the cover member 300. Thereby, in the case of the immersion cooling where the cooling medium 400 is interposed between the battery cells 100, the cover member 300 is opened, thereby reliably preventing the cooling medium 400 from leaking to the outside through the vent hole H opened together. Further, according to the embodiment of the present disclosure, since the process is simplified when manufacturing the battery assembly 10, cost and time can be reduced, thereby improving productivity.

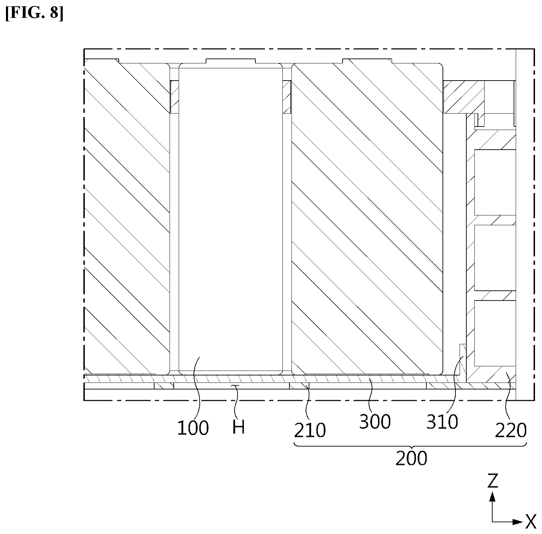

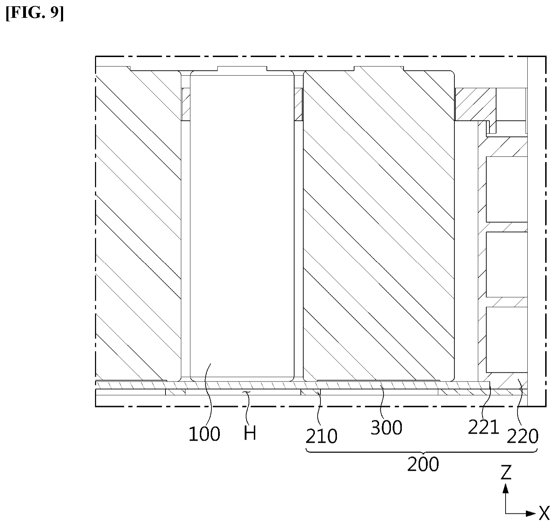

FIG. 8 is a cross-sectional view of a battery assembly to which a cover member is applied according to another embodiment of the present disclosure. FIG. 9 is a cross-sectional view of a battery assembly to which a cover member is applied according to yet another embodiment of the present disclosure.

Referring to FIGS. 8 and 9, a battery assembly 10 according to an embodiment of the present disclosure may include a structure that can further improve sealing performance between a cover member 300 and a frame 200.

For example, in one embodiment, as shown in FIG. 8, the cover member 300 may include a bent part 310. The bent part 310 may be configured such that the end part of the cover member 300 is bent and extended in a direction away from the vent hole H. The bent part 310 may be configured to be in close contact with the side surface of the frame 200, i.e., the side frame 220.

In another embodiment, the frame 200 may include an inserting groove 221. The inserting groove 221 may be configured such that at least a part of the frame 200 is recessed and the end part of the cover member 300 is inserted. The inserting groove 221 is preferably formed in the side frame 220.

According to the embodiment of the present disclosure, since the sealing performance between the cover member 300 and the frame 200 can be further ensured, the cooling medium 400 can be prevented from flowing towards the vent hole H through the space between the end part of the cover member 300 and the frame 200. Further, according to the embodiment of the present disclosure, the fixing force of the cover member 300 to the frame 200 can be improved. Thereby, even if an impact is applied to the battery assembly 10, it is possible to prevent the cover member 300 from moving or breaking.

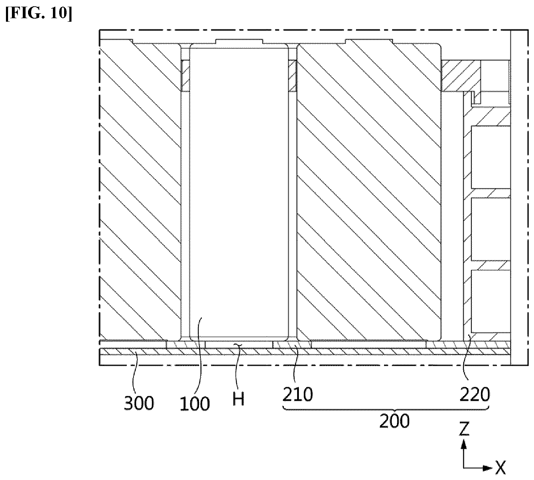

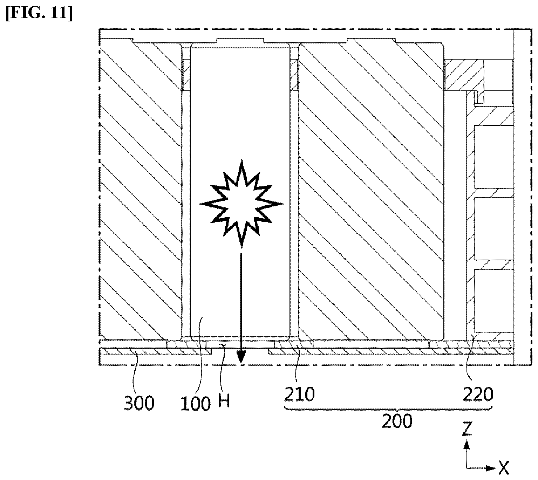

FIG. 10 is a cross-sectional view of a battery assembly according to another embodiment of the present disclosure. FIG. 11 is a drawing for explaining that a cover member is opened when a thermal event occurs in the battery assembly of FIG. 10.

Referring to FIGS. 1, 3, 10 and 11, a battery assembly 10 according to an embodiment of the present disclosure includes a plurality of battery cells 100, a frame 200, and a cover member 300, as described above. The cover member 300 covers a vent hole H of the frame 200. The cover member 300 may be configured to close the vent hole H, and may also be partially opened by a venting gas discharged from the battery cell 100.

In this case, the cover member 300 according to the present embodiment may be located at an outer side of the frame 200. That is, the cover member 300 may be configured to cover the vent hole H from the outside. The cover member 300 may be configured to cover the vent hole H from the outside of the bottom frame 210. A part of the frame 200 may be located between the cover member 300 and the battery cells 100, and more specifically, the bottom frame 210 may be located between the cover member 300 and the battery cells 100. The cover member 300 may be located below the bottom frame 210.

The vent part 110 (see FIG. 3) of the battery cell 100 may face the vent hole H formed in the frame 200. In this case, the width of the vent hole H may be narrower than the width of the battery cell 100 so that the battery cell 100 cannot be inserted into the vent hole H.

The method by which the cover member 300 is attached to the frame 200 is not particularly limited. As an example, the cover member 300 may be attached to the frame 200 by a method such as applying an adhesive or ultrasonic welding.

The cover member 300 may prevent venting gas or the like from being discharged to the outside of the frame 200 in normal times. Thereby, in the normal state of the battery cell 100, it is possible to stably maintain a state in which the cover member 300 covers the vent hole H. Further, according to the embodiment of the present disclosure, the cover member 300 may be configured to close the vent hole H from the outside in normal times, thereby preventing the foreign materials from flowing into the inside of the frame 200 from the outside.

Moreover, referring to FIG. 11, the cover member 300 may be configured to be opened by the venting gas. That is, the cover member 300 may be configured to maintain a state of being attached to the frame 200 in a normal situation to cover the vent hole H and then be opened under a certain situation. Specifically, the cover member 300 may be configured to be opened by the pressure or heat of the venting gas when a thermal event occurs in the battery cell 100. For example, the cover member 300 may be released and detached from the state of being attached to the frame 200, or partially broken by the pressure of the venting gas, or melted and opened by the heat of the venting gas.

When an abnormal situation occurs in the battery cell 100, the cover member 300 is opened, and the venting gas can pass through the vent hole H and a part of the broken or melted cover member 300 as shown by the bold arrow in FIG. 11, and can be smoothly discharged to the outside of the frame 200. Thereby, when an abnormal situation occurs in the battery cell 100, it is possible to prevent the pressure inside the battery assembly 10 from rising, and also prevent further chain ignition of other battery cells 100. Therefore, according to the aspect of the present disclosure, the safety and reliability of the battery assembly 10 can be guaranteed.

Further, according to the embodiment of the present disclosure, the vent holes H provided at one side of the battery cells 100 other than the specific battery cell 100 in which an event has occurred are maintained in a closed state by the cover member 300, thereby making it possible to suppress or prevent the venting gas discharged to the outside of the battery assembly 10 from affecting the adjacent other battery cells 100. As a result, it is possible to more effectively prevent further chain ignition of other battery cells 100.

Meanwhile, the cover member 300 may be configured to be broken by the pressure of the venting gas. Alternatively, the cover member 300 may be configured to be at least partially melt by the heat of the flame. That is, the cover member 300 may be configured to open only the portion facing the vent part 110 through which the venting gas is vented when an abnormal situation occurs in the battery cell 100. Thereby, even if the cover member 300 is opened, the vent hole H is not fully opened but only a part thereof is opened, thereby making it possible to prevent the cooling medium 400 from leaking to the outside through the vent hole H.

The material, shape and the like of the cover member 300 may be the same as or similar to the cover member 300 previously described in FIGS. 4 and 5, and the like except that the cover member 300 is located at an outer side of the frame 200. The details of the cover member 300 and the frame 200 are omitted because they overlap with the contents previously described.

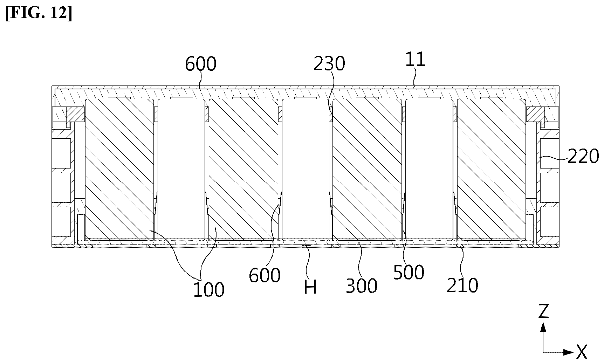

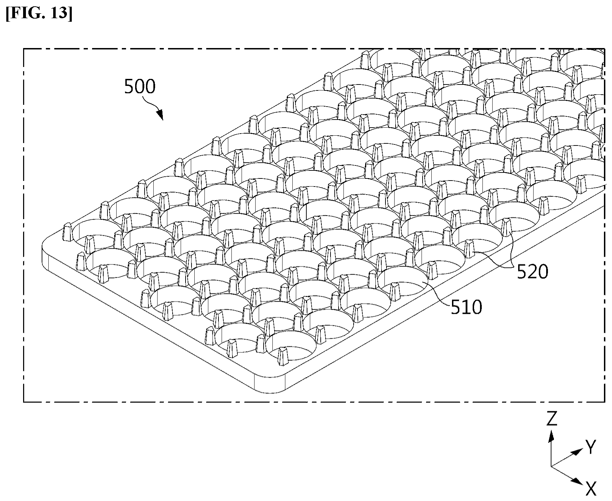

FIG. 12 is a cross-sectional view of a battery assembly according to an embodiment of the present disclosure. For example, FIG. 12 may be a diagram showing a cross section taken along the line I-I' of FIG. 1. Further, FIG. 13 is a perspective view of a holder applied to a battery assembly according to an embodiment of the present disclosure.

Referring to FIGS. 12 and 13, the battery assembly 10 according to an embodiment of the present disclosure may further include a holder 500. The holder 500 may be configured to at least partially house the battery cell 100. For example, the top frame 230 may be configured to house the upper part of the battery cell 100, and the holder 500 may be configured to house the lower part of the battery cell 100.

The holder 500 may be located at an inner side of the cover member 300. The holder 500 may also be located at an inner side of the frame 200. For example, as in the embodiment shown in FIG. 12, when the vent hole H is provided at the lower part, the holder 500 may be located at an upper part of the cover member 300. In this case, the holder 500 may be configured to be seated on the cover member 300. That is, the holder 500 may be seated on the flat upper surface of the cover member 300.

Specifically, the holder 500 may include a housing part 510 and a spacer 520. The housing part 510 may be configured to at least partially house a battery cell 100. The housing part 510 may be provided in a plurality of numbers, and the plurality of housing parts 510 may be configured to receive a plurality of battery cells 100, respectively. The battery cell 100 may be inserted into the housing part 510 in an upright state to prevent movement in the up, down, left and right directions. Meanwhile, in one embodiment, when the battery cell 100 is provided as a cylindrical cell, the plurality of housing parts 510 may be provided in a cylindrical shape.

The battery cell 100 may be configured such that at least a part thereof is inserted into the housing part 510 and the side surface provided with the vent part 110 comes into contact with the cover member 300. That is, the holder 500 and the battery cell 100 may be configured such that they come into contact with the cover member 300 at the same time.

The spacer 520 may be provided between adjacent housing parts 510 among the plurality of housing parts 510. The spacer 520 may be provided in a form that protrudes upward from the body of the holder 500. The spacer 520 may be configured to maintain a gap between the battery cells 100. Further, the spacer 520 may be configured to guide the insertion of the battery cell 100 into the housing part 510 when assembling the battery cell 100.

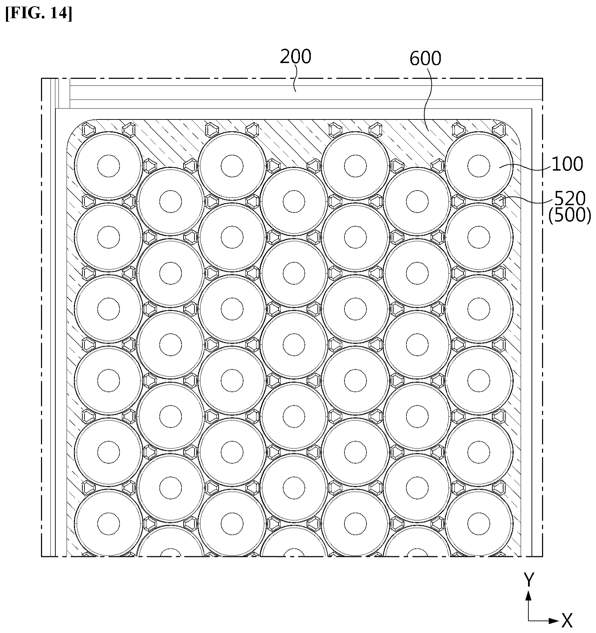

FIG. 14 is an upper view of a battery assembly according to an embodiment of the present disclosure as viewed from above. For example, FIG. 14 may be a diagram showing a cross section taken along the line II-II' of FIG. 1.

Referring to FIGS. 12 and 14, the battery assembly 10 according to an embodiment of the present disclosure may further include an adhesive 600.

The battery assembly 10 can be formed into a single unit by filling an adhesive 600 between a plurality of battery cells 100. That is, the adhesive 600 can be filled in a space formed between a plurality of battery cells 100. The adhesive 600 can be configured to be filled between the battery cells 100 to fix the battery cells 100 to each other.

The adhesive 600 may be configured to at least partially cover a plurality of battery cells 100. Referring to FIG. 12, the adhesive 600 may cover an upper side and a lower side of the battery cells 100 in the height direction (Z-axis direction) of the battery assembly 10 to form the structure of the battery assembly 10 together with the frame 200. In particular, the adhesive 600 may be configured to maintain the gap between the battery cells 100 when the holder 500 is not provided. Thereby, it is possible to increase structural rigidity of the battery assembly 10.

The adhesive 600 may be provided on at least one side of the frame 200. Referring to FIG. 12, the adhesive 600 may be provided at an inner side of the bottom frame 210 to cover one side of the battery cell 100. Further, the adhesive 600 may be provided at the outer side of the top frame 230 to cover the other side of the battery cell 100. When the holders 500 are provided as in the embodiment shown in FIGS. 12 and 14, the adhesive 600 can be interposed between the holders 500, i.e., between the spacers 520.

The adhesive 600 may be configured to prevent the penetration of moisture or foreign materials, or the like. In particular, the adhesive 600 may be provided on both sides of the cooling flow path through which the cooling medium 400 is interposed, thereby preventing the cooling medium 400 from leaking to the outside of the battery assembly 10. The adhesive 600 may prevent the cooling medium 400 from leaking through the housing hole of the top frame 230 or the vent hole H of the bottom frame 210.

Further, the adhesive 600 may increase the heat dissipation efficiency of a plurality of battery cells 100, thereby further increasing the cooling performance of the battery cells 100. The adhesive 600 can be formed from any material that can improve the fixing and heat dissipation efficiency of the battery cells 100. As a result, it is possible to prevent a chain ignition when a thermal event occurs due to an abnormality in the battery cells 100.

In addition, the adhesive 600 can perform an insulating role to prevent current flow to the adjacent battery cell 100 when at least one specific battery cell 100 among the plurality of battery cells 100 is damaged due to an abnormal situation.

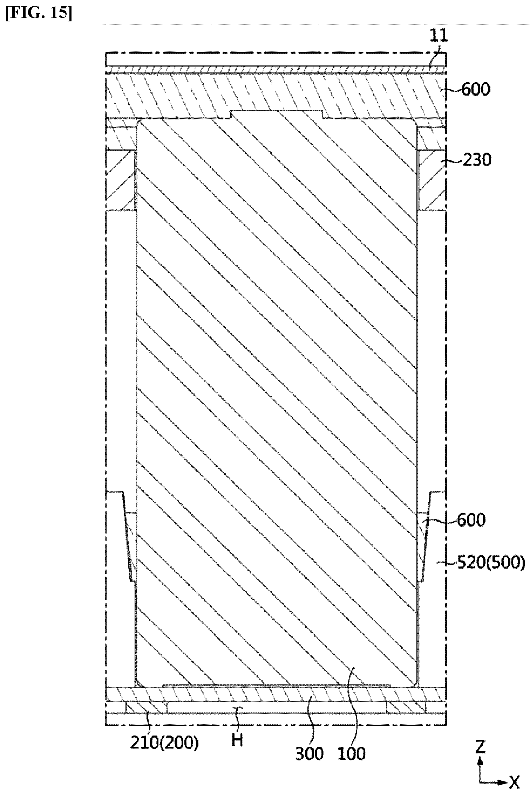

FIG. 15 is an enlarged view of a battery assembly according to an embodiment of the present disclosure. For example, FIG. 15 may be an enlarged view of a portion of FIG. 12.

A predetermined gap may be formed between the battery cell 100 and the spacer 520, and an adhesive 600 may be applied between the battery cells 100 in a state where the battery cell 100 is coupled to the holder 500. Thereby, the adhesive 600 may be interposed between the battery cell 100 and the spacer 520.

When a venting gas is discharged from the battery cell 100 and the cover member 300 and the vent hole H are opened, the cooling medium 400 may be leaked to the outside through the opened vent hole H. Moreover, the cooling medium 400 may move to the space between the spacer 520 and the battery cell 100 and leak to the outside through the housing part 510. However, according to the present embodiment, as the adhesive 600 is interposed between the battery cell 100 and the spacer 520, the cooling medium 400 moves into a space between the spacer 520 and the battery cell 100, and the battery cell 100 can be prevented from leaking to the outside of the housing space through the housing part 510.

Meanwhile, the spacer 520 may include a portion whose thickness becomes narrower as it goes in one direction. That is, a portion where a gap between the battery cell 100 and the spacer 520 becomes wider may be provided as it goes in one direction. For example, as in the embodiment shown in FIG. 15, the spacer 520 may include a portion whose thickness becomes smaller as it goes upward. In this case, the lower part of the spacer 520 is in a state of being almost in contact with the battery cell 100, and the spacer 520 may be configured such that the distance from the battery cell 100 becomes farther as it goes toward the upper part.

According to the embodiment of the present disclosure, the adhesive 600 can be guided to be housed in a space between the spacer 520 and the battery cell 100. Thereby, it is possible to more reliably seal the space between the spacer 520 and the battery cell 100, thereby more effectively preventing the cooling medium 400 from leaking to the outside.

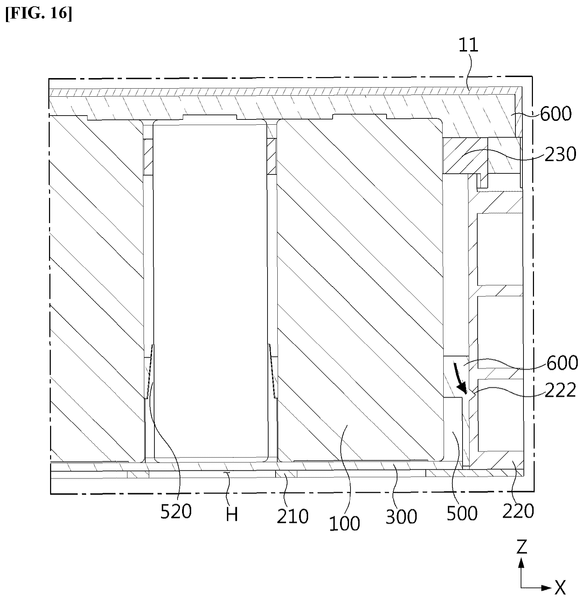

FIG. 16 is a cross-sectional view of a battery assembly according to another embodiment of the present disclosure.

The adhesive 600 may be interposed between the battery cell 100 and the frame 200. In particular, when the holder 500 is provided, the adhesive 600 may be interposed between the holder 500 and the frame 200. The adhesive 600 has a greater risk of leaking between the battery cell 100 and the frame 200. Thereby, in order to prevent the adhesive 600 from leaking to the outside, the frame 200 may include a filling groove 222. The filling groove 222 may be configured to be filled with the adhesive 600.

Referring to FIG. 16, the filling groove 222 may be provided particularly in the side frame 220. For example, the filling groove 222 may be provided at a position where the side frame 220 faces the battery cell 100. The filling groove 222 may be configured such that at least a part of the inner surface of the side frame 220 is recessed to the inside.

According to the embodiment of the present disclosure, when the adhesive 600 is filled between the battery cell 100 and the side frame 220, it may be guided to the filling groove 222 so as to be filled between the battery cell 100 and the side frame 220. Thereby, it is possible to more effectively prevent the cooling medium 400 from leaking to the outside through the vent hole H.

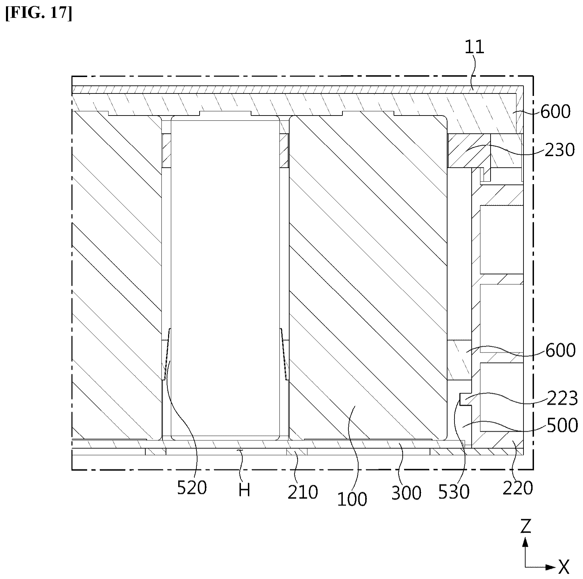

FIG. 17 is a cross-sectional view of a battery assembly according to yet another embodiment of the present disclosure.

The battery assembly 10 according to an embodiment of the present disclosure may further include a structure that can improve the fixing force between the holder 500 and the frame 200. For example, as in the embodiment shown in FIG. 17, the holder 500 and the frame 200 may include a male-female coupling structure. Specifically, the frame 200 may include a coupling protrusion 223 configured such that at least a part thereof protrudes inward, and the holder 500 may include a coupling groove 530 configured such that the coupling protrusion 223 is inserted. The coupling protrusion 223 and the coupling groove 530 may be configured to be fitted to each other.

According to the embodiment of the present disclosure, the fixing force between the holder 500 and the frame 200 is improved, thereby improving the sealing force or adhesion performance between the holder 500 and the frame 200. In addition, according to the embodiment of the present disclosure, since the space between the holder 500 and the frame 200 can be minimized, it is possible to prevent the cooling medium 400 from leaking into the space between the holder 500 and the frame 200.

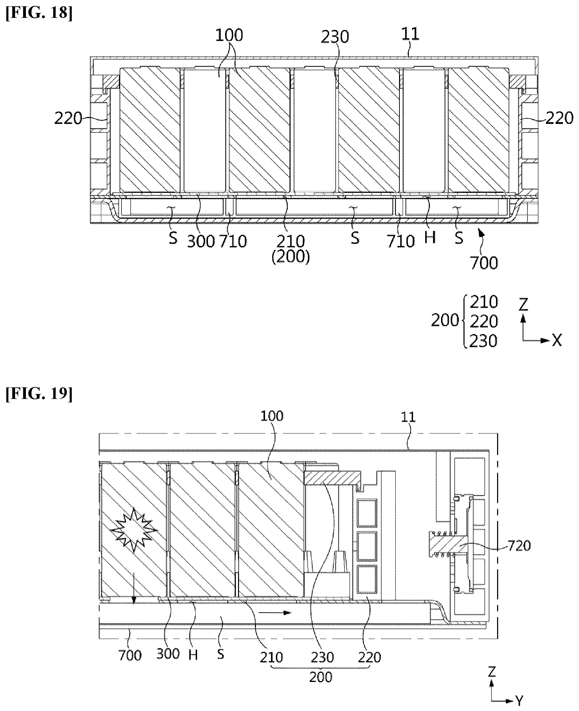

FIG. 18 is a cross-sectional view of a battery assembly to which an outer case is applied according to an embodiment of the present disclosure. FIG. 19 is a cross-sectional view of another part of a battery assembly to which an outer case is applied according to an embodiment of the present disclosure.

Meanwhile, referring to FIGS. 18 and 19, the battery assembly 10 according to an embodiment of the present disclosure may further include an outer case 700. The outer case 700 may be provided at an outer side of the frame 200. A vent flow path S configured to allow venting gas to flow between the outer case 700 and the frame 200 may be formed. The vent flow path S may be configured to communicate with the vent hole H. The structure of the vent flow path S may be provided as a partition flow path structure so that the venting gas does not move to an empty space outside the frame 200. The detailed structure of the vent flow path S will be described later.

Thereby, a plurality of battery cells 100 can be housed inside the outer case 700 while being supported by the frame 200. As in the embodiment shown in FIGS. 18 and 19, if the vent part 110 of the battery cell 100 included in the battery assembly 10 is formed at a lower side of the battery cell 100, the high-temperature gas discharged downward through the vent part 110 can be quickly discharged to the outside of the battery assembly 10 through the vent flow path S between the bottom frame 210 and the outer case 700.

The vent flow path S according to the present embodiment can be provided below the vent hole H. The venting gas discharged from the vent part 110 of the battery cell 100 can pass through the vent hole H and move to the vent flow path S. The venting gas that has moved to the vent flow path S can be discharged to the outside.

When a thermal event occurs in a battery cell 100 and high-temperature gas or flames are generated in this way, the battery assembly 10 according to the present disclosure can guide the venting gas through the vent flow path S in a specific direction rather than in all directions and discharge it to the outside, and prevent other battery cells 100 from being thermally damaged as much as possible in the process of discharging the vent gas to the outside.

The outer case 700 may further include a rib 710 configured to partition the vent flow path S into a plurality of numbers. The rib 710 may be seated on the outer case 700 and prevent the movement of the venting gas in the direction crossing the rib 710.

The rib 710 may be provided in a plurality of numbers and may be disposed to be spaced apart from each other along one direction. Thereby, at least one vent flow path S through which the venting gas flows may be defined by a plurality of ribs 710 that are spaced apart from each other. FIG. 3 show an example in which the ribs 710 are spaced apart in the left and right directions.

Meanwhile, referring to FIG. 19, the outer case 700 may include a discharge part 720. The discharge part 720 may be configured to discharge the venting gas to the outside. The discharge part 720 may be configured to communicate with the vent flow path S. Thereby, the venting gas discharged to the vent flow path S through the vent hole H may be directed to the discharge part 720 through the vent flow path S, and this venting gas may be discharged to the outside of the outer case 700 through the discharge part 720.

Further, the discharge part 720 may be symmetrically provided on both sides of the outer case 700. As the discharge part 720 is provided on both sides of the outer case 700, when an abnormal situation occurs in the battery cell 100, high-temperature gas and flame can be discharged in both directions of the outer case 700, thereby making it easy to discharge venting gas, etc. to the outside of the outer case 700. In FIG. 19, the discharge part 720 is provided at the rear of the outer case 700, but it may be provided at another location.

The rib 710 may be configured to guide the venting gas to the discharge part 720. That is, the rib 710 may be provided to extend toward the discharge part 720. The structure of such ribs 710 allows venting gas, etc. to move only toward the discharge part 720, thereby guiding the high-temperature venting gas and flame to the discharge part 720 side. Therefore, even if a thermal event occurs in any battery cell 100, it is possible to prevent gas or the like from moving to other adjacent battery cells 100 and causing chain explosions. Further, the ribs 710 functions as a kind of barrier, thereby preventing gas discharged from the battery cells 100 included in the battery assembly 10 from spreading in all directions. Thereby, according to the present embodiment, the venting gas is quickly guided from the outside of the battery assembly 10 to the discharge part 720 side, so that it is less likely to spread in all directions from the outside of the battery assembly 10, thereby preventing further chain ignitions.

In addition, when gas is generally emitted from a battery cell 100, pieces of electrode plates or pieces of active material inside the battery cell 100 may be emitted to the outside in a state heated to a high temperature, and these high-temperature particles may appear in the form of sparks. The battery assembly 10 according to the present disclosure prevents high-temperature particles from easily escaping directly to the outside of the outer case 700 even when they are emitted from the battery cell 100, and allows them to escape by sufficiently lowering the temperature while being guided to the discharge part 720 through the vent flow path S, which is the space between the bottom frame 210 and the outer case 700, thereby preventing them from functioning as a source of ignition from the outside of the battery assembly 10.

Moreover, according to the present disclosure, a movement path for venting gas using the bottom frame 210 and the discharge part 720 is formed at a lower part of the battery assembly 10, and the venting gas can be discharged in one target direction, for example, in the direction in which the discharge part 720 is formed.

According to the embodiment, in the case where high-temperature gas or flames, etc. are discharged from the battery cell 100 in a situation such as thermal runaway, the discharged gas or flames may not be directed to the upper part. In particular, in the case where a passenger is located at the upper part of the battery assembly 10, such as in an electric vehicle, the embodiment can suppress or delay the gas or flames, etc. from being directed toward the passenger. In particular, according to an embodiment of the present disclosure, directional venting can be performed at upper and side parts of the battery assembly 10, thereby improving the safety of users, such as passengers that are located at the upper part.

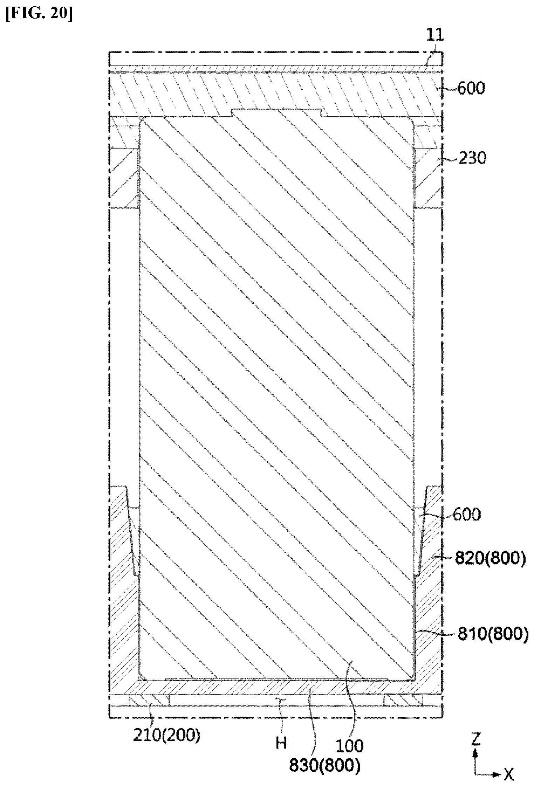

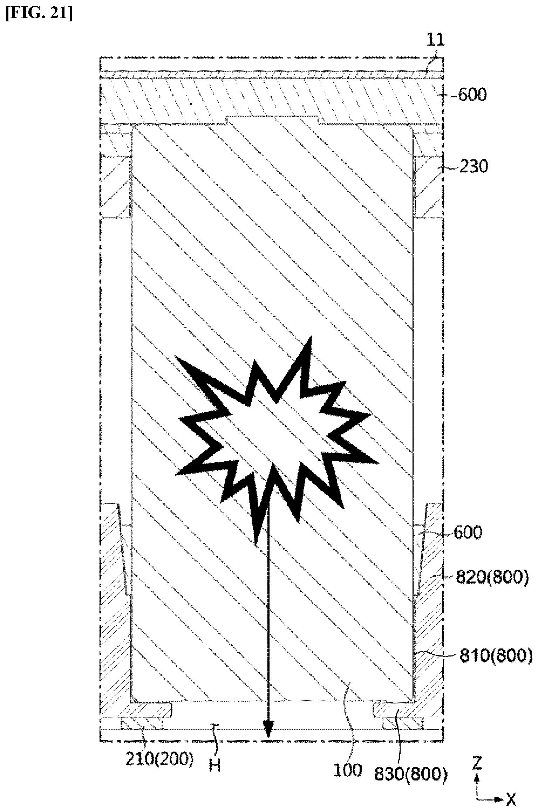

FIG. 20 is a cross-sectional view of a battery assembly according to another embodiment of the present disclosure. FIG. 21 is a diagram for explaining that a cover member is opened when a thermal event occurs in the battery assembly of FIG. 20.

Referring to FIGS. 1, 3, 20, and 21, a battery assembly 10 according to another embodiment of the present disclosure includes a plurality of battery cells 100, a frame 200, and a cover member 800 as described above. The cover member 800 covers a vent hole H of the frame 200. The cover member 800 may be configured to close the vent hole H, and may also be partially opened by a venting gas discharged from the battery cell 100.

In this case, the cover member 800 according to the present embodiment may include a housing part 810 that at least partially houses the battery cell 100. That is, the cover member 800 according to the present embodiment may include a housing part 810 that houses the battery cell 100 while covering the vent hole H of the frame 200. The cover member 800 according to the present embodiment may have a form in which the cover member 300 and the holder 500 of FIG. 15 described above are integrated into one component.

The housing part 810 may be provided in a plurality of numbers, and may be configured such that the plurality of battery cells 100 are respectively housed in the plurality of housing parts 810. The battery cell 100 may be inserted into the housing part 810 in an upright state, thereby preventing movement in the up, down, left and right directions. Meanwhile, in one embodiment, if the battery cell 100 is provided as a cylindrical cell, a plurality of housing parts 810 may be provided in a cylindrical shape.

Further, the cover member 800 may include a bottom part 830 that faces the vent part 110 of the battery cell 100.

At least a part of the battery cell 100 may be inserted into the housing part 810 and at the same time, the portion provided with the vent part 110 may be in contact with the bottom part 830. That is, when the battery cell 100 is inserted into the housing part 810, the vent part 110 can face the bottom part 830.

The bottom part 830 can cover the vent hole H at the inner side of the frame 200. The bottom part 830 can be located between the battery cell 100 and the frame 200. Specifically, the bottom part 830 may be located between the battery cell 100 and the bottom frame 210. The bottom part 830 may be located above the bottom frame 210.

The cover member 800 can prevent venting gas and the like from being discharged to the outside of the frame 200 in normal times. Thereby, in the normal state of the battery cell 100, it is possible to stably maintain a state in which the cover member 800 covers the vent hole H. Further, according to the embodiment of the present disclosure, the cover member 800 can be configured to close the vent hole H from the inside in normal times, so that foreign materials cannot flow into the inside of the frame 200 from the outside.

Moreover, referring to FIG. 21, the cover member 800 may be configured to be opened by the venting gas. In the case of the battery cell 100 housed in the housing part 810 of the cover member 800, the vent hole H is maintained in the state of being covered by the bottom part 830 in normal times, and then may be opened in a certain situation. Specifically, the cover member 800, particularly the bottom part 830, may be configured to be opened by the pressure or heat of the venting gas when a thermal event occurs in the battery cell 100. For example, the bottom part 830 may be partially broken by the pressure of the venting gas, or may be melted and opened by the heat of the venting gas.

When an abnormal situation occurs in the battery cell 100, the cover member 800, particularly the bottom part 830, is opened, so that the venting gas can pass through the vent hole H and a part of the broken or melted cover member 800 as shown by the bold arrow in FIG. 21, and can be smoothly discharged to the outside of the frame 200. As a result, when an abnormal situation occurs in the battery cell 100, it is possible to prevent the pressure inside the battery assembly 10 from rising, and also prevent further chain ignition of other battery cells 100. Thereby, according to the aspect of the present disclosure, the safety and reliability of the battery assembly 10 can be guaranteed.

Further, according to the embodiment of the present disclosure, since the vent holes H provided on one side of the battery cells 100 other than the specific battery cell 100 in which an event has occurred are maintained in a closed state by the cover member 800, thereby making possible to suppress or prevent the venting gas discharged to the outside of the battery assembly 10 from affecting other adjacent battery cells 100. Thereby, it is possible to more effectively prevent further chain ignition of other battery cells 100.

Meanwhile, the bottom part 830 of the cover member 800 may be configured to be broken by the pressure of the venting gas. Alternatively, the bottom part 830 of the cover member 800 may be configured to be at least partially melted by the heat of the flame. That is, the cover member 800 may be configured to open only a portion that faces the vent part 110 through which the venting gas is vented when an abnormal situation occurs in the battery cell 100. Thereby, even if the cover member 800 is opened, the vent hole H is not fully opened, but only a part is opened, thereby preventing the cooling medium 400 from leaking to the outside through the vent hole H.

As long as the bottom part 830 can be broken or melted by the venting gas, the shape or material of the cover member 800 including the bottom part 830 is not particularly limited. In one embodiment, in order to induce the bottom part 830 of the cover member 800 to be broken or melted by the venting gas, the bottom part 830 may be provided to be sufficiently thin.

In yet another embodiment, a notch may be formed in the bottom part 830 to induce breakage. The notch refers to a portion in the bottom part 830 that is dug by a predetermined thickness. Two regions of the bottom part 830 may be divided by the notches. Since the notch is a portion having weak strength, the notch is broken and a part of the bottom part 830 facing the vent part 110 is opened, thereby discharging the venting gas.

Further, in another embodiment, the bottom part 830 may be formed with a boundary part having a thickness difference to induce breakage. A relatively thin portion of the bottom part 830 may face the vent part 110, and the portion may be broken or melted by the venting gas discharged from the vent part 110.

Further, in another embodiment, the bottom part 830 may be formed with a plurality of holes to induce breakage. The plurality of holes may be arranged along a specific line, and two regions of the bottom part 830 may be divided by the line formed by the plurality of holes. Since the line formed by the plurality of holes is a weak portion, a part of the bottom part 830 facing the vent part 110 is opened while the portion of the bottom part 830 corresponding to the line being broken, through which the venting gas may be discharged.

The cover member 800 according to the present embodiment may have a form in which the cover member 300 and the holder 500 in FIG. 15 are united and integrated into one part as described above. That is, the cover member 800 may close the vent hole H of the battery cell 100 while housing and fixing the battery cells 100.

Meanwhile, the cover member 800 may include a spacer 820 that is provided between adjacent housing parts 810 among a plurality of housing parts 810 and configured to maintain a gap between the battery cells 100. The spacer 820 may be configured to guide the insertion of the battery cell 100 into the housing part 810 when assembling the battery cells 100.

Further, an adhesive 600 may be interposed between the spacers 820. This adhesive 600 may be configured to prevent the penetration of moisture, foreign materials, or the like. In particular, the adhesive 600 may be provided on both sides of the cooling flow path through which the cooling medium is interposed, thereby preventing the cooling medium from leaking to the outside of the battery assembly 10. The adhesive 600 may prevent the cooling medium from leaking through the vent hole H of the bottom frame 210, etc.

A predetermined gap may be formed between the battery cell 100 and the spacer 820, and the adhesive 600 may be applied between the battery cells 100 in a state where the battery cells 100 are housed in the housing part 810. Thereby, the adhesive 600 may be interposed between the battery cell 100 and the spacer 820.

When the venting gas is discharged from the battery cell 100 and the bottom part 830 and the vent hole H of the cover member 800 are opened, the cooling medium may be leaked to the outside through the opened vent hole H. Furthermore, the cooling medium may move to the space between the spacer 820 and the battery cell 100 and be leaked to the outside through the housing part 810. However, according to the present embodiment, as the adhesive 600 is interposed between the battery cell 100 and the spacer 820, it is possible to prevent the cooling medium from moving into the space between the spacer 820 and the battery cell 100 and leaking to the outside of the space where the battery cell 100 is housed through the housing part 810.

Meanwhile, the spacer 820 may include a portion whose thickness becomes narrower in one direction. That is, a portion may be provided in which the gap between the battery cell 100 and the spacer 820 becomes wider as it goes in one direction. For example, as in the embodiment shown in FIG. 20, the spacer 820 may include a portion whose thickness becomes smaller as it goes upward. In such a case, the lower part of the spacer 820 is almost in contact with the battery cell 100, and the spacer 820 may be configured such that the distance from the battery cell 100 increases as it goes toward the upper part. According to this embodiment, the adhesive 600 may be guided to be housed in the space between the spacer 820 and the battery cell 100. Thereby, it is possible to more reliably seal the space between the spacer 820 and the battery cell 100, thereby more effectively preventing the cooling medium from leaking to the outside.

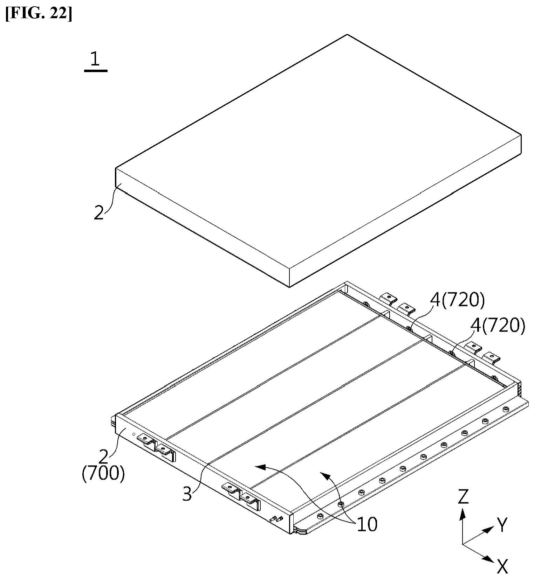

FIG. 22 is a schematic perspective view of a battery pack according to an embodiment of the present disclosure.

Referring to FIG. 22, the battery pack 1 according to the present disclosure may include one or more battery assemblies 10 according to the present disclosure. In addition, the battery pack 1 according to the present disclosure may further include various other components in addition to the battery assembly 10 according to the present disclosure. For example, the battery pack 1 according to the present disclosure may further include components of a battery pack that are publicly known at the time of filing the application of the present disclosure, such as a BMS (Battery Management System), a bus bar, a relay, a current sensor, etc.

In addition, the battery pack 1 according to the present disclosure may further include a pack case 2 in FIG. 22. This pack case 2 may provide a space capable of housing the battery assembly 10 according to the present disclosure. In particular, when a plurality of battery assemblies 10 are included in the battery pack 1, the pack case 2 may be partitioned into spaces for separately housing the plurality of battery assemblies 10 through a cross beam 3 or the like.

This pack case 2 may be an outer case 700 shown in FIGS. 18 and 19. Thereby, the pack case 2 may be provided with a discharge part 720. According to the embodiment of the present disclosure, the venting gas discharged through the vent hole H of the battery assembly 10 can be discharged to the outside of the pack case 2 through the discharge part 720, thereby preventing the propagation of thermal runaway in the battery pack 1 unit.

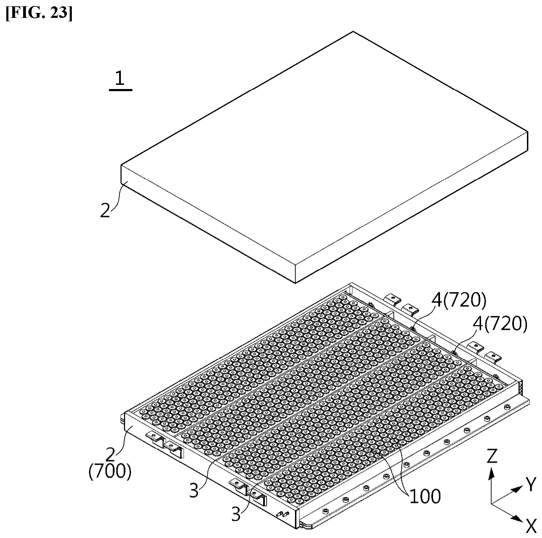

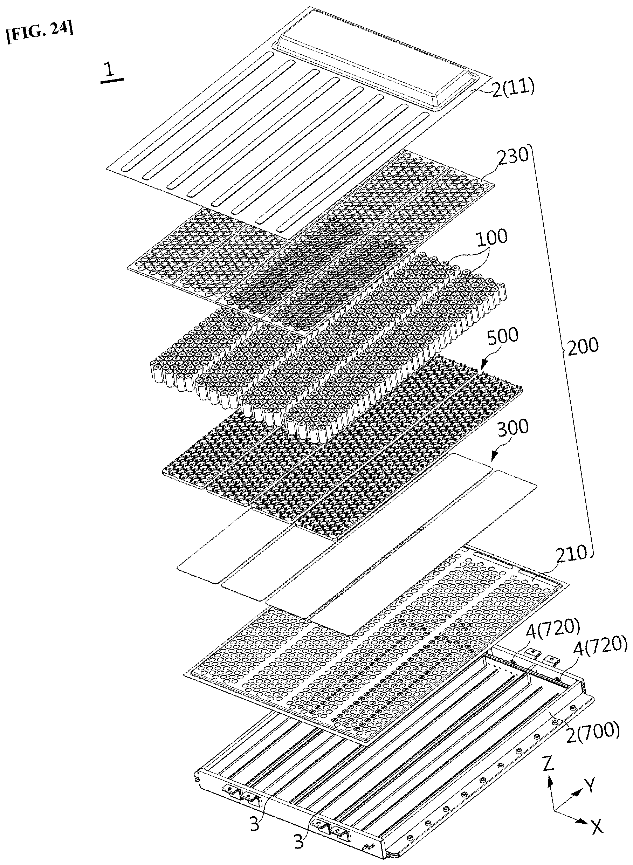

FIG. 23 is a schematic perspective view showing the inside of a battery pack according to another embodiment of the present disclosure. FIG. 24 is an exploded perspective view of a battery pack according to another embodiment of the present disclosure.

Referring to FIGS. 23 and 24, the battery pack 1 according to the present disclosure may include a battery assembly 10 according to the present disclosure, but may not include a separate pack case 2, and the assembly cover 11 and the outer case 700 of the battery assembly 10 may be configured to function as the pack case 2. In this case, components of the battery pack, such as a BMS, a bus bar, and a relay, may be included inside the outer case 700. Such a battery pack 1 is also called a cell-to-pack in that the battery cells 100 are directly housed in the pack case 2. In recent years, the development of such CTP-type battery packs has also been active, and the present disclosure can be applied to such a CTP-type battery pack. In particular, a cover member 300 is provided on the inside of the frame 200, thereby capable of ensuring the safety and reliability of the battery pack 1.

Further, this pack case 2 may be the outer case 700 shown in FIGS. 18 and 19. The pack case 2 is provided with the above-mentioned discharge part 720, so that the venting gas discharged from the plurality of battery cells 100 can be discharged to the outside of the pack case 2 through the discharge part 720, thereby preventing the propagation of thermal runaway in the battery pack 1 unit.

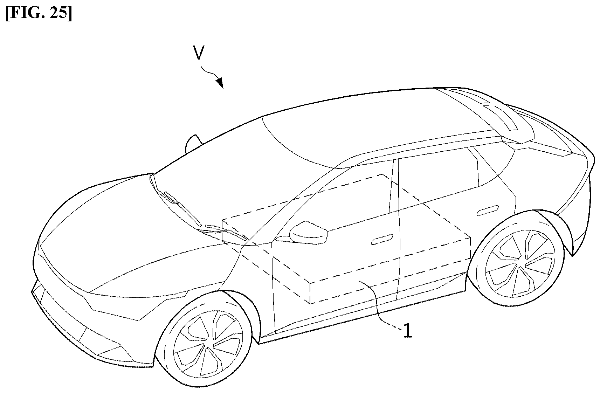

FIG. 25 is a schematic perspective view of a vehicle including a battery pack according to an embodiment of the present disclosure.

Referring to FIG. 25, the vehicle V according to an embodiment of the present disclosure may include one or more battery packs 1 according to an embodiment of the present disclosure. The vehicle V according to the present disclosure may be, for example, an electric vehicle, a hybrid vehicle, or a plug-in hybrid vehicle. The vehicle V includes a four-wheeled vehicle and a two-wheeled vehicle. The vehicle V can operate by receiving supply of power from a battery pack 1 according to an embodiment of the present disclosure.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

V: vehicle
11: battery pack
2: pack case
3: cross beam
4: venting device
10: battery assembly
11: assembly cover
100: battery cell
110: vent part
200: frame
210: bottom frame
220: side frame
221: inserting groove
222: filling groove
223: coupling protrusion
230: top frame
H: vent hole
300, 800: cover member
310: bent part
400: cooling medium
500: holder
510: housing part
520: spacer
530: coupling groove
600: adhesive
700: outer case
710: rib
720: discharge part
S: vent flow path

## Claims

1. A battery assembly comprising:
a plurality of battery cells having a vent part configured to discharge venting gas;
a frame that is configured such that the plurality of battery cells are seated therein and is formed with a plurality of vent holes at positions corresponding to the vent part; and
a cover member that is configured to cover the vent holes and to be opened by the venting gas.

2. The battery assembly according to claim 1,
further comprising a cooling medium that is configured to be filled between the battery cells.

3. The battery assembly according to claim 1,
wherein the cover member is located at an inner side of the frame.

4. The battery assembly according to claim 1,
wherein the cover member is configured to cover at least a part of the plurality of vent holes.

5. The battery assembly according to claim 1,
wherein the cover member comprises a bent part configured such that the end part is bent and extended in a direction away from the vent hole.

6. The battery assembly according to claim 1,
wherein the frame comprises,
an inserting groove configured such that at least a part thereof is recessed so as to insert an end part of the cover member.

7. The battery assembly according to claim 1,
wherein the cover member is located at an outer side of the frame.

8. The battery assembly according to claim 1,
further comprising a holder that is located at an inner side of the cover member and configured to at least partially house the battery cell.

9. The battery assembly according to claim 8,
wherein the holder comprises,
a plurality of housing parts that are configured to at least partially house each battery cell, and
a spacer that is provided between adjacent housing parts among the plurality of housing parts and configured to maintain a gap between the battery cells.

10. The battery assembly according to claim 9,
further comprising an adhesive configured to be filled between the battery cells and thus fix the battery cells to each other.

11. The battery assembly according to claim 10,
wherein the adhesive is interposed between the battery cell and the spacer.

12. The battery assembly according to claim 11,
wherein the spacer comprises a portion whose thickness becomes narrower as it goes in one direction.

13. The battery assembly according to claim 10,
wherein the adhesive is interposed between the battery cell and the frame, and
the frame comprises a filling groove configured to be filled with the adhesive.

14. The battery assembly according to claim 8,
wherein the frame comprises a coupling protrusion configured such that at least a part thereof protrudes to the inside, and
the holder comprises a coupling groove configured to allow the coupling protrusion to be inserted therein.

15. The battery assembly according to claim 1,
wherein the cover member comprises a housing part that at least partially houses the battery cell.

16. The battery assembly according to claim 15,
wherein the cover member comprises a bottom part that faces the vent part.

17. The battery assembly according to claim 15,
wherein the cover member comprises a spacer that is provided between adjacent housing parts among the plurality of housing parts and configured to maintain a gap between the battery cells.

18. The battery assembly according to claim 1,
wherein a vent flow path is provided below the vent hole, and
the venting gas discharged from the vent part of the battery cell passes through the vent hole and moves to the vent flow path.

19. The battery assembly according to claim 1,
further comprising an outer case provided in the outside of the frame,
wherein the battery assembly is formed with a vent flow path configured to communicate with the vent hole between the frame and the outer case.

20. The battery assembly according to claim 19,
wherein the outer case further comprises a rib configured to partition the vent flow path into a plurality of numbers.

21. The battery assembly according to claim 20,
wherein the outer case comprises a discharge part that is configured to communicate with the vent flow path and is configured to discharge the venting gas to the outside, and
the rib is configured to guide the venting gas to the discharge part.

22. A battery pack comprising the battery assembly according to any one of claims 1 to 21.

23. A vehicle comprising the battery assembly according to any one of claims 1 to 21.
